Europäisches Patentamt

European Patent Office

Office européen des brevets

(11) Numéro de publication: **0 233 822 B1**

# FASCICULE DE BREVET EUROPEEN

(45) Date de publication de fascicule du brevet:
24.04.91

(51) Int. Cl.5: **B60N 2/44**

(21) Numéro de dépôt: 87400295.9

(22) Date de dépôt: **10.02.87**

(54) Armature de siège à modules de construction assemblés.

(30) Priorité: **21.02.86 FR 8602390**

(43) Date de publication de la demande:
**26.08.87 Bulletin 87/35**

(45) Mention de la délivrance du brevet:
**24.04.91 Bulletin 91/17**

(84) Etats contractants désignés:
**DE ES GB IT**

(56) Documents cités:
**EP-A- 0 036 824**
**FR-A- 1 457 894**
**FR-A- 2 515 946**

(73) Titulaire: **REGIE NATIONALE DES USINES RE-
NAULT**
**Boîte postale 103 8-10 avenue Emile Zola**
**F-92109 Boulogne-Billancourt(FR)**

(72) Inventeur: **Charpentier, Louis**
**88, rue du Petit Bois**
**F-78370 Plaisir(FR)**
Inventeur: **Laporte, Alain**
**24, boulevard Louesse**
**F-92500 Rueil Malmaison(FR)**

(74) Mandataire: **Ernst-Schonberg, Michel**
**REGIE NATIONALE DES USINES RENAULT (S.
0804)**
**F-92109 Boulogne Billancourt Cedex(FR)**

## Description

L'invention concerne une armature de siège à modules de construction assemblés du type comportant une entretoise avant rigidement reliée à des bras latéraux de support du coussin et une traverse supérieure rigidement reliée à des montants de support du dossier.

Il est courant de réaliser des pièces d' ammeublement à partir de modules de construction en bois ou métalliques notamment dans le but de simplifier leur processus de fabrication et d'adapter la cadence de montage aux besoins réels de production.

La construction modulaire de sièges présente en outre l'avantage de supprimer les risques de déformation accidentelle des armatures préalablement à leur habillage et réduit de ce fait à la fois les rebuts de pièces non conformes et l'ensemble des défauts de montage.

Un exemple de construction modulaire de sièges fait l'objet de publications FR-A-2 317 589 et FR-A-2 055 497.

La publication FR-A1 2 515 946 montre un dossier de siège à modules de construction assemblés, du type comportant une traverse supérieure rigidement reliée à des montants latéraux de support du dossier, où les montants possèdent des extrémités convergentes d' appui et de liaison avec la traverse supérieure, tandis que les extrémités divergentes de la traverse portent des surfaces d'appui et de liaison complémentaires.

On sait également que les sièges montés dans l'habitacle d'un véhicule sont généralement disposés côte à côte et accolés à des parois latérales dont l'écartement défini avant les études d'aménagement de cet habitacle interdit très souvent le réemploi de sièges destinés à un véhicule ayant des dimensions d'habitacle différentes.

L'invention a principalement pour objet une armature de sièges à modules de construction destinés notamment à l'équipement d'un véhicule automobile doit l'agencement des modules permet la confection de sièges de tailles différentes à partir des mêmes modules.

L'invention à également pour objet une armature de siège dont l'agencement de la traverse supérieure du dossier est partiellement déformable dans le but d'obtenir une absorption et une dissipation de l'énergie transmise au cours d'un choc sur le haut du dossier.

L'invention à encore pour objet une armature de siège dont le montage peut être réalisé mécaniquement par des robots d'assemblage et de soudure.

Conformément à l'invention les bras latéraux de support du coussin et les montants de support du dossier possèdent des extrémités convergentes d'appui et de liaison respectivement avec l'entretoise avant et avec la traverse supérieure tandis que les extrémités divergentes desdites entretoise et traverse portent des surfaces d'appui et de liaison complémentaires.

L'armature de siège ainsi réalisée autorise l'ajustement de l'entretoise et de la traverse en correspondance avec l'écartement des autres modules dans le but d'augmenter ou de réduire simultanément la taille du coussin et du dossier.

D'autres caractéristiques et avantages de l'invention ressortiront de la description qui va suivre, faite en regard des dessins annexés et donnant, à titre d'exemple non limitatif, une forme de réalisation de l'invention.

Sur ces dessins :
- la figure 1 est une vue schématique éclatée en perspective de l'armature de siège.
- la figure 2 est une vue en plan de la liaison entre une extrémité de l'entretoise avant et d'un bras latéral.
- la figure 3 est une vue en élévation de la liaison représentée à la figure 2 suivant le plan de coupe 3-3 de la figure 2.
- la figure 4 est une vue en plan de la liaison entre la traverse supérieure avec un montant latéral.
- la figure 5 est une section de la liaison représentée à la figure 4 dans le plan 5-5 de cette figure.

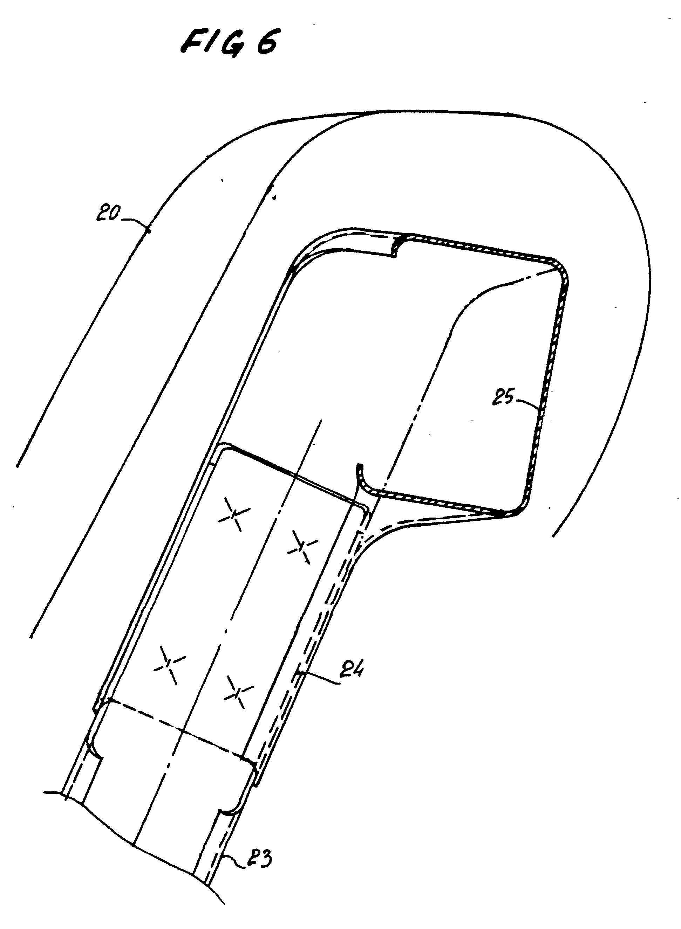

- la figure 6 est une vue en coupe de la liaison représentée à la figure 4 suivant la ligne 6-6 de cette figure.

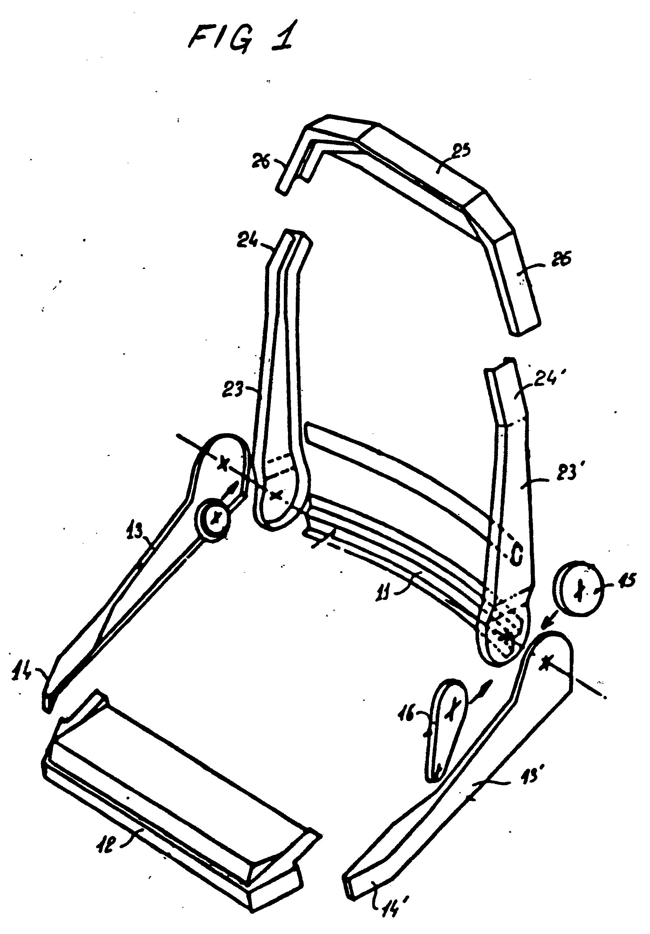

Ainsi que cela est montré à la figure 1, l'armature du siège est constituée par un ensemble de modules en tôle destinés à la confection de l'armature du coussin 10 et l'armature du dossier 20.

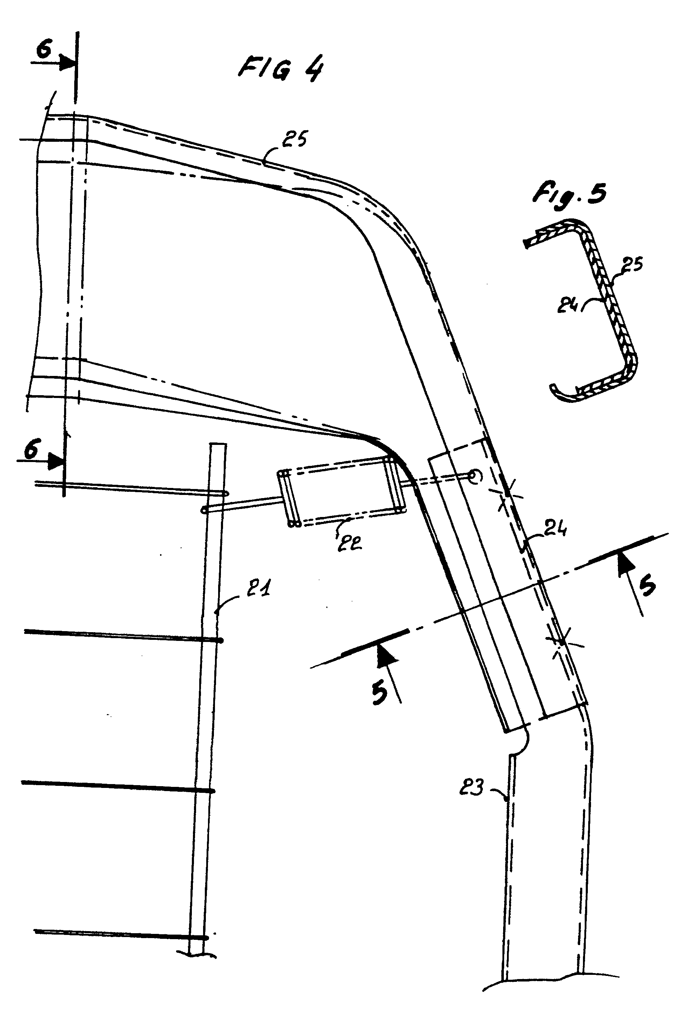

Le coussin 10 et le dossier 20 reposent sur des nappes de suspension respectives mais non représentées constituées à base de fils et de ressorts ondulés. Le dossier 20 repose sur une nappe de suspension 21 tendue à l'aide de ressorts 22 sur les montants latéraux 23, 23'. Ces montants possèdent une section en U représentée à la figure 5 dont les extrémités 24, 24' sont inclinées de façon convergente vers le sommet du dossier.

Sur les extrémités 24, 24' est rapportée une traverse supérieure 25 comportant à titre d'exemple à profil en U dont les extrémités 26, 26' divergentes définissant une section d'encastrement à surfaces d'appui des extrémités 24, 24' des montants 23, 23'. Il y a lieu de noter que la traverse supérieure peut tout aussi bien posséder un profil tubulaire encastré dans les montants latéraux 23, 23'.

On réalise de cette manière aisément une liaison d'appui de la traverse 25 sur les montants 23, 23'.

On conçoit aisément que l'écartement des montants 23, 23' dépend de l'importance de l'encastrement précité et qu'il est ainsi possible de réaliser des armatures dont la traverse 25 peut occuper notamment une position haute correspondant à un écartement plus important de montants 23, 23' ou une position basse correspondant à un resserement des montants 23, 23'.

Il en résulte que l'on réalise aisément à l'aide des éléments modulaires 23, 23', 25 des armatures de dossiers hauts et larges et des armatures de dossiers plus bas et moins larges.

De manière analogue l'armature du coussin 10 repose sur une nappe de ressorts ondulés montés en tension entre une traverse arrière 11 et une entretoise avant 12. Cette dernière est reliée à des bras latéraux 13, 13'.

Ces derniers possèdent également une section en U dont les extrémités 14, 14' sont inclinés de façon convergente vers l'axe longitudinal du siège et sont coiffés par les extrémités divergentes 122, 122' de l'entretoise 12.

L' entretoise 12 s'étend le long des extrémités convergentes 14, 14' et possède localement une section en U de profil complémentaire à celui des extrémités des bras 13, 13' et l'extrémité divergente 122 ou 122' définit une zone d'encastrement à surfaces d'appui des extrémités convergentes 14, 14' des bras latéraux 13, 13'. L'écartement des bras 13, 13' dépend donc également de l'importance de leur encastrement dans l'entretoise 12, si bien qu'il est possible de réaliser des armatures destinées à porter un coussin large et profond ou un coussin plus étroit.

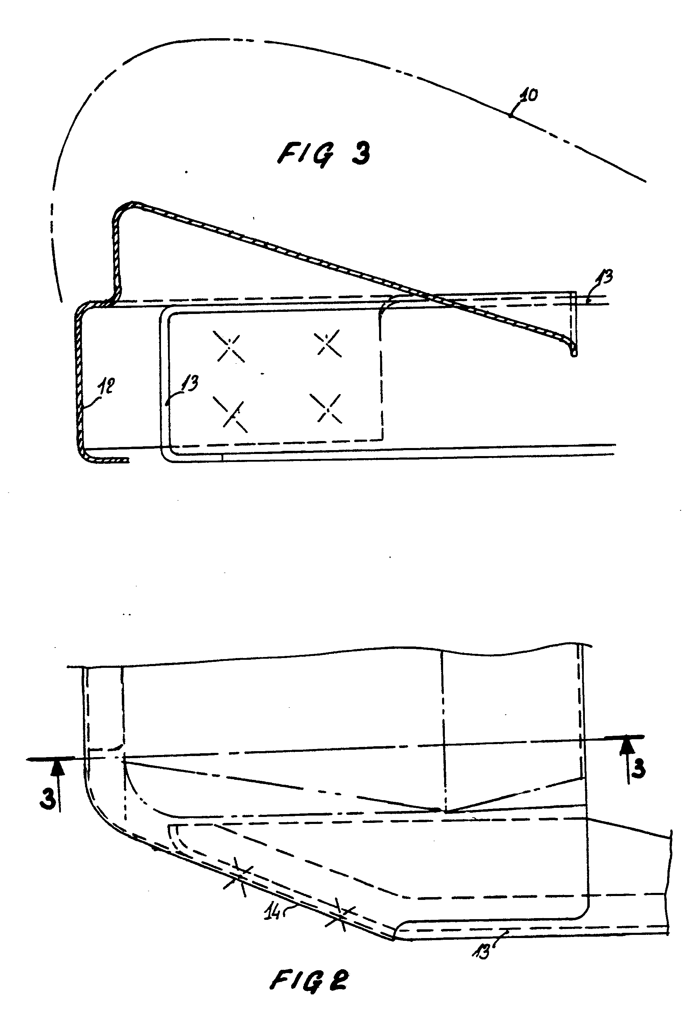

Ainsi que cela est montré sur les figures 1, 2, 3 l'entretoise 12, réalisée à partir d'un flan de tôle embouti, s'étend transversalement au dessus des extrémités avant convergentes 14, 14' des bras latéraux 13, 13' et s'incline progressivement vers l'arrière en dessous du plan d'appui du coussin 10 dans le but de retenir l'utilisateur sanglé sur le coussin et d'éviter son glissement vers l'avant sous l'effet des accélérations longitudinales qui lui sont communiquées au cours des décélérations brutales du véhicule.

Par ailleurs dans le but d'éviter aux passagers du véhicule des lésions par suite de chocs sur le haut du dossier on utilise avantageusement un profil de traverse supérieure 25 peu résistant dont l'épaisseur est adaptée pour obtenir une substantielle absorption d'énergie.

Sans sortir du cadre de l'invention les liaisons respectivement réalisées entre les modules 12, 13, 13' et 25, 23, 23' peuvent faire appel à des techniques de soudure, de collage ou à des fixations conventionnelles.

L'armature décrite en référence à la figure 1 est celle d'un siège à dossier inclinable qui pourra être complété par un module d'articulation 15 ou par un bras de commande 16 rigidement relié à la base du montant 23' dans le but d'obtenir la manoeuvre du dossier sous l'action d'un effort de traction ou de poussée communiqué par un vérin.

Selon un autre mode de réalisation possible de l'invention on pourra bien entendu réaliser l'armature à partir d'un ensemble de deux flasques latéraux coudés dont les branches constituent respectivement les montants 23, 23' et les bras 13, 13'. Lesdits flasques seront de la sorte simplement entretoisés par l'entretoise avant 12 et par la traverse 15.

**Revendications**

1. Armature de siège à modules de construction assemblés, du type comportant une entretoise avant (12) rigidement reliée à des bras latéraux. (13, 13') de support du coussin (10) et une traverse supérieure (25) rigidement reliée à des montants (23, 23') de support du dossier (20), caractérisée par le fait que les bras latéraux (13, 13') et les montants (23, 23') possèdent des extrémités convergentes (14, 14' - 24, 24') d'appui et de liaison respectivement avec l'entretoise avant (12) et avec la traverse supérieure (25) tandis que les extrémités divergentes (26, 26') desdites entretoise et traverse (12, 25) portent des surfaces d'appui et de liaison complémentaires.

2. Armature de siège selon la revendication 1, caractérisée par le fait que les liaisons respectives à surfaces d'appui de la traverse supérieure (25) avec les montants latéraux (23, 23') et de l'entretoise avant (12) avec les bras latéraux (13, 13') sont constituées par des encastrements.

3. Armature de siège selon la revendication 2, caractérisée par le fait que la traverse supérieure (25) et l'entretoise avant (12) coiffent respectivement les montants et bras latéraux (23, 23', 13, 13').

4. Armature de siège selon l'une quelconque des revendications 2 et 3, caractérisée par le fait que le profil de traverse supérieure (25) possède une épaisseur et une résistance adaptée à l'absorption d'énergie d'efforts d'impacts sur le sommet du siège.

5. Armature de siège selon l'une quelconque des revendications 2 à 4, caractérisée par le fait que l'entretoise avant (12) est constituée à partir d'un flan de tôle embouti qui s'étend transversalement au dessus des extrémités avant des bras latéraux (13, 13') et qui s'incline vers l'arrière en dessous du plan d'appui du coussin (10) dans le but d'éviter le glissement vers l'avant de l'utilisateur du siège.

## Claims

1. A seat frame comprising assembled construction modules of the type comprising a front strut (12) rigidly connected to lateral arms (13, 13') supporting the cushion (10) and an upper crossbar (25) rigidly connected to uprights (23, 23') supporting the seat back (20), characterized in that the lateral arms (13, 13') and the uprights (23, 23') have converging ends (14, 14' - 24, 24') for bearing on and connection with the front strut (12) and the upper crossbar (25) respectively, while the diverging ends (26, 26') of the strut and crossbar (12, 25) have complementary bearing and connection surfaces.

2. A seat frame as claimed in claim 1, characterized in that the respective bearing surface connections of the upper crossbar (25) with the lateral uprights (23, 23') and the front strut (12) with the lateral arms (13, 13') are formed by housings.

3. A seat frame as claimed in claim 2, characterized in that the upper crossbar (25) and the front strut (12) cap the uprights and lateral arms (23, 23', 13, 13') respectively.

4. A seat frame as claimed in any one of claims 2 and 3, characterized in that the upper crossbar profile (25) has a thickness and a resistance adapted to the absorption of energy from impact forces on the top of the seat back.

5. A seat frame as claimed in any one of claims 2 to 4, characterized in that the front strut (12) is formed from a drawn sheet steel panel which extends transversely above the front ends of the lateral arms (13, 13') and is inclined towards the rear below the bearing surface for the cushion (10) so as to prevent the seat user from sliding forward.

## Ansprüche

1. Zusammengestellte Sitzarmatur mit Konstruktionsmodulen, mit einer vorderen Querstrebe (12), die steif mit Seitenarmen (13, 13') zur Aufnahme eines Sitzpolsters (10) verbunden ist und mit einer oberen Querstrebe (25), die steif mit Stützen (23, 23') zur Aufnahme eines Rückenpolsters (20) verbunden ist, dadurch gekennzeichnet, daß die Seitenarme (13, 13') und die Stützen (23, 23') konvergierende Enden (14, 14' - 24, 24') zur Aufnahme und Halterung der vorderen Querstrebe (12) bzw. der oberen Querstrebe (25) aufweisen, wobei die divergierenden Enden (26, 26') der Querstreben (12, 25) zusätzliche Stütz- und Verbindungsflächen aufweisen.

2. Sitzarmatur nach Anspruch 1, dadurch gekennzeichnet, daß die entsprechenden Stützflächenverbindungen der oberen Querstrebe (25) mit den seitlichen Stützen (23, 23') und der vorderen Querstrebe (12) mit den seitlichen Armen (13, 13') auf Klemmwirkungen beruhen.

3. Sitzarmatur nach Anspruch 2, dadurch gekennzeichnet, daß die obere Querstrebe (25) und die vordere Querstrebe (12) die Stützen bzw. die seitlichen Arme (23, 23', 13, 13') bedecken.

4. Sitzarmatur nach einem der Ansprüche 2 und 3, dadurch gekennzeichnet, daß das Profil der oberen Querstrebe (25) eine derartige Dicke und eine derartige Widerstandsfähigkeit aufweist, daß durch Schlagkräfte auftreffende Energie auch im Oberteil des Sitzes absorbiert wird.

5. Sitzarmatur nach einem der Ansprüche 2 bis 4, dadurch gekennzeichnet, daß die vordere Querstrebe (12) aus einem tiefgezogenen stufenförmigen Blech besteht, das sich quer und oberhalb der vorderen Enden der seitlichen Arme (13, 13') erstreckt und das nach hinten unterhalb der Stützebene des Sitzpolsters (10) geneigt ist, um so ein Verrutschen der sitzenden Person nach vorne zu verhindern.

# FIG 1

FIG 3

FIG 2

# FIG 4

## Fig. 5

# FIG 6